# DEMANDE DE BREVET EUROPEEN

(11) **EP 2 431 662 A1**
(43) Date de publication de la demande: **21.03.2012**
(21) Numéro de dépôt: 11305608.9
(22) Date de dépôt: 19.05.2011
(51) Int. Cl.: F22B 37/00, G01N 27/90

(54) **Ensemble et procédé de détection et de mesure du taux de colmatage des passages d'eau dans un circuit secondaire d'un réacteur nucléaire à eau sous pression**

(30) Priorité: 19.05.2010 FR 1053860
(71) Demandeur: Areva NP, 92400 Courbevoie (FR)
(72) Inventeur: Debroise, Mikael, 71150 RULLY (FR); Kernin, Yann, 71390 GRANGES (FR); Piriou, Marc, 71100 CHALON SUR SAÔNE (FR); Sartre, Bernard, 71100 SAINT-REMY (FR)
(74) Mandataire: Blot, Philippe Robert Emile

(57) **Abrégé**

L'invention concerne un ensemble de détection et de mesure du taux de colmatage par des dépôts contenant au moins un matériau ferromagnétique, comprenant une sonde (20) déplaçable en continu dans un tube (5) et comportant un corps (21) portant sur sa face externe au moins une source aimantée (30) d'auto-orientation du corps de la sonde (20), au moins trois émetteurs (35) de champ magnétique et au moins trois détecteurs de champ magnétique placés chacun entre deux émetteurs (35) contigus.

## Description

La présente invention concerne un ensemble de détection et de mesure du taux de colmatage des passages d'eau d'un circuit secondaire dans des plaques entretoises d'un générateur de vapeur d'un réacteur nucléaire à eau sous pression.

Les réacteurs nucléaires à eau sous pression comportent des générateurs de vapeur qui assurent l'échauffement et la vaporisation d'eau d'alimentation par la chaleur transportée par l'eau sous pression de refroidissement du coeur du réacteur. Les réacteurs à eau sous pression comportent, sur chacune de leurs branches primaires, un générateur de vapeur ayant une partie primaire dans laquelle circule l'eau sous pression de refroidissement du réacteur et une partie secondaire recevant de l'eau d'alimentation qui est échauffée et vaporisée progressivement et ressort de la partie secondaire du générateur de vapeur sous forme de vapeur qui est envoyée à une turbine associée au réacteur nucléaire pour assurer l'entraînement d'un alternateur de production du courant électrique.

De tels générateurs de vapeur comportent une enveloppe externe, appelée enveloppe de pression, de forme générale cylindrique disposée avec son axe vertical et solidaire d'une plaque tubulaire sensiblement horizontale dont la face inférieure ou face d'entrée constitue une paroi de la boîte à eau d'alimentation du générateur de vapeur, en eau sous pression constituant le fluide primaire.

Le générateur de vapeur comporte également un faisceau de tubes cintrés en U comportant chacun deux branches droites parallèles entre elles dont les extrémités sont fixées dans des trous traversant la plaque tubulaire entre la face inférieure d'entrée de la plaque tubulaire et la face supérieure de sortie depuis laquelle les tubes du faisceau sont maintenus dans la partie secondaire du générateur de vapeur dans laquelle une enveloppe interne, appelée enveloppe de faisceau, disposée dans une position coaxiale à l'intérieur de l'enveloppe de pression, délimite un espace annulaire avec cette enveloppe de pression.

Les tubes du faisceau sont de plus maintenus dans une position régulière dans des plans transversaux perpendiculaires à l'axe du faisceau, par des plaques entretoises qui sont réparties à des distances régulières suivant la hauteur du faisceau.

Les plaques entretoises sont traversées par un réseau d'ouvertures qui est identique au réseau d'ouvertures de la plaque tubulaire du générateur de vapeur.

Ces plaques entretoises qui maintiennent les tubes du faisceau de tubes dans l'enveloppe de faisceau, disposent de passages d'eau secondaire le long des tubes du faisceau, au travers de l'épaisseur de chaque plaque entretoise et qui sont en forme de lobes, appelés passages tri ou quadri-foliés.

Pendant le fonctionnement du générateur de vapeur, l'eau d'alimentation circulant en contact avec la surface extérieure des tubes du faisceau et à l'intérieur du circuit secondaire du réacteur, se charge en impuretés de nature diverse et notamment de type magnétite, qui peuvent se déposer sous la forme de boue dans différentes parties du générateur de vapeur et en particulier dans les interstices ménagées entre les tubes du faisceau et les passages des plaques entretoises qui leur sont réservés pour permettre la circulation de l'eau de refroidissement autour des tubes du faisceau.

Les dépôts qui s'accumulent entre les passages des plaques entretoises et la surface extérieure des tubes du faisceau colmatent progressivement ces passages empêchant une circulation de l'eau de refroidissement et pouvant produire un certain encastrement des tubes dans les passages, de telle sorte que les tubes se trouvent rigidement fixés dans la plaque entretoise et ne peuvent plus se déplacer dans la direction axiale commune au passage et au tube et sont également immobilisés dans les directions radiales.

Dans ces conditions, le rendement thermique du générateur de vapeur est largement dégradé et à l'extrême, les tubes risquent d'être mis sous contrainte au droit des plaques entretoises et de se fissurer en provoquant alors une fuite d'eau primaire dans le circuit secondaire qui entraîne l'arrêt du réacteur nucléaire.

Pour mesurer le taux de colmatage de ces dépôts qui s'accumulent entre les passages des plaques entretoises et la surface extérieure des tubes, on connaît dans le FR-2 927 723 également au nom de la Demanderesse, une sonde comportant un corps de forme générale cylindrique portant, sur sa surface externe, au moins deux détecteurs de champ magnétique disposés coaxialement et solidairement audit corps et contenant au moins un aimant permanent coaxial à ce corps et dont l'orientation Nord-Sud coïncide avec l'axe longitudinal du corps, lesdits au moins deux détecteurs étant reliés par des moyens de connexion à un système d'amplification et de visualisation des variations des signaux transmis par ces détecteurs lors du déplacement de la sonde dans un tube du générateur de vapeur.

Chaque passage des plaques entretoises a une forme comportant trois ou quatre lobes ou alvéoles, appelés respectivement trifoliés ou quadrifoliés.

Ainsi, chaque passage est constitué par une alternance d'alvéoles et de portions pleines en contact avec un tube.

La mesure du taux de colmatage par ce type de sonde correspond à une moyenne sur l'ensemble du passage, c'est-à-dire sur la totalité des alvéoles.

Or, le phénomène de colmatage dans chacun des passages n'est pas uniforme et une alvéole peut être plus colmatée que les alvéoles voisines. De plus, la localisation des dépôts dans une alvéole donnée est variable et ils peuvent se situer préférentiellement du côté du tube ou du côté de la plaque entretoise ou être répartis uniformément sur toute la périphérie de la section du passage. De par son principe de fonctionnement, la sonde mentionnée précédemment est sensible à la distance entre le dépôt mesuré et le détecteur et présente, de ce fait, une incertitude de mesure liée à la géométrie du dépôt.

Pour mesurer le taux de colmatage de chaque alvéole indépendamment, il faut utiliser soit une sonde tournante, mais qui présente certains inconvénients au niveau de la mise en oeuvre du fait qu'elle doit comporter une motorisation embarquée et le temps d'inspection est relativement long, soit une sonde multiéléments mais dont la couverture angulaire pour intercepter l'information utile nécessite alors un nombre d'éléments de détection importants qui rend complexe la réalisation et l'interfaçage de ce type de sonde.

L'invention a donc pour but d'éviter ces inconvénients et de proposer un dispositif et un procédé permettant par des moyens simples à mettre en oeuvre, de détecter et d'estimer avec précision le taux de colmatage de chaque alvéole indépendamment des passages de l'eau dans les plaques entretoises du circuit secondaire des générateurs de vapeur.

L'invention a donc pour objet un ensemble de détection et de mesure du taux de colmatage par des dépôts contenant au moins un matériau ferromagnétique, des passages d'eau d'un circuit secondaire dans des plaques entretoises d'un générateur de vapeur, d'un réacteur nucléaire à eau sous pression, ledit générateur de vapeur comprenant un faisceau de tubes de circulation de l'eau primaire, dont les branches verticales sont maintenues dans des passages des plaques entretoises, munies chacun d'au moins trois alvéoles séparées par des portions pleines en contact avec un tube, caractérisé en ce qu'il comprend une sonde déplaçable en continu dans un tube du faisceau et comportant un corps de forme allongé cylindrique portant, d'une part, sur sa face externe, au moins une source aimantée d'auto-orientation du corps de la sonde par rapport aux portions pleines des passages et, d'autre part, au moins trois émetteurs de champ magnétique destinés à être placés automatiquement chacun en face d'une portion pleine lors du déplacement de la sonde dans un tube au niveau de chaque passage et en ce que le corps de la sonde contient au moins trois détecteurs de champ magnétique placés chacun entre deux émetteurs contigus, l'ensemble des détecteurs étant relié par des moyens de connexion à un système d'amplification et de visualisation des signaux transmis par lesdits détecteurs lors du déplacement de la sonde dans un tube au niveau de chaque passage à examiner dans les plaques entretoises.

Selon d'autres caractéristiques de l'invention :
- lesdits émetteurs et lesdits détecteurs sont disposés sur une même circonférence du corps de la sonde,
- ladite au moins source aimantée est disposée devant la circonférence formée par lesdits émetteurs et lesdits détecteurs par rapport au sens de déplacement de la sonde dans le tube,
- ladite au moins source aimantée est disposée derrière la circonférence formée par lesdits émetteurs et lesdits détecteurs par rapport au sens de déplacement de la sonde dans le tube,
- ladite au moins source aimantée comprend au moins une première source aimantée et au moins une seconde source aimantée disposées de part et d'autre de la circonférence formée par lesdits émetteurs et lesdits détecteurs,
- ladite au moins source aimantée est formée par un aimant permanent ou un électro-aimant dont l'orientation Nord-Sud coïncide avec l'axe radial du corps de la sonde,
- lesdits émetteurs sont au nombre de trois répartis à 120° sur la circonférence ou au nombre de quatre répartis à 90 ° sur cette circonférence.
- lesdits détecteurs sont au nombre de trois répartis à 120° sur la circonférence ou au nombre de quatre répartis à 90° sur cette circonférence,
- chaque émetteur est formé par un aimant permanent ou un électro-aimant dont l'un des pôles est dirigé radialement vers l'extérieur du corps de la sonde,
- ladite au moins source aimantée est disposée sur une même génératrice du corps de la sonde qu'un émetteur,
- chaque émetteur est formé par une bobine émettrice,
- chaque bobine émettrice est disposée sur une génératrice sensiblement médiane du corps entre deux sources aimantées,
- chaque détecteur de champ magnétique est formé par un magnétomètre, et
- les émetteurs assurent le rôle des sources aimantées d'auto-positionnement angulaire.

L'invention a également pour objet un procédé de détection et de mesure du taux de colmatage par des dépôts contenant au moins un matériau ferromagnétique, des passages d'eau d'un circuit secondaire dans des plaques entretoises d'un générateur de vapeur d'un réacteur nucléaire sous pression, au moyen d'un ensemble de détection et de mesure tel que précédemment défini, caractérisé en ce que :
- on introduit au moins une sonde libre en rotation dans au moins un tube du faisceau de tubes du générateur de vapeur,
- on déplace à une vitesse déterminée ladite au moins sonde dans ledit au moins tube, ladite au moins source aimantée orientant automatiquement le corps de la sonde pour placer chaque émetteur de champ magnétique en regard d'une portion pleine d'un passage et chaque détecteur de champ magnétique en regard d'une alvéole dudit passage, et
- on amplifie et on visualise les variations des signaux transmis par lesdits détecteurs lors du déplacement de ladite au moins sonde dans ledit au moins tube au niveau de chaque passage à examiner dans les plaques entretoises.

Selon une autre caractéristique, en fonction des variations des signaux transmis par lesdits détecteurs, on établit une carte de répartition des dépôts pour au moins une zone de plaque entretoise du générateur de vapeur.

Les caractéristiques et avantages de l'invention apparaîtront au cours de la description qui va suivre, donnée à titre d'exemple et faite en se référant aux dessins annexés, sur lesquels :
- la figure 1 est une vue schématique en perspective d'un générateur de vapeur d'un réacteur nucléaire à eau sous pression,
- la figure 2 est une vue schématique de dessus partielle d'une plaque entretoise quadrifoliée d'un générateur de vapeur d'un réacteur nucléaire à eau sous pression,
- la figure 3 est une vue schématique en coupe verticale d'un passage d'un tube du faisceau de tubes dans une plaque entretoise,
- la figure 4 est une vue schématique en élévation d'une sonde d'un ensemble de détection et de mesure, conforme à l'invention,
- la figure 5 est une vue schématique d'un tube d'un générateur de vapeur, partiellement arrachée et montrant la position d'une sonde dans un tube avec une plaque entretoise trifoliée, et
- la figure 6 est une vue schématique en coupe transversale de la sonde et montrant le chemin des lignes du champ issues des émetteurs de champ magnétique dans une des configurations possibles.

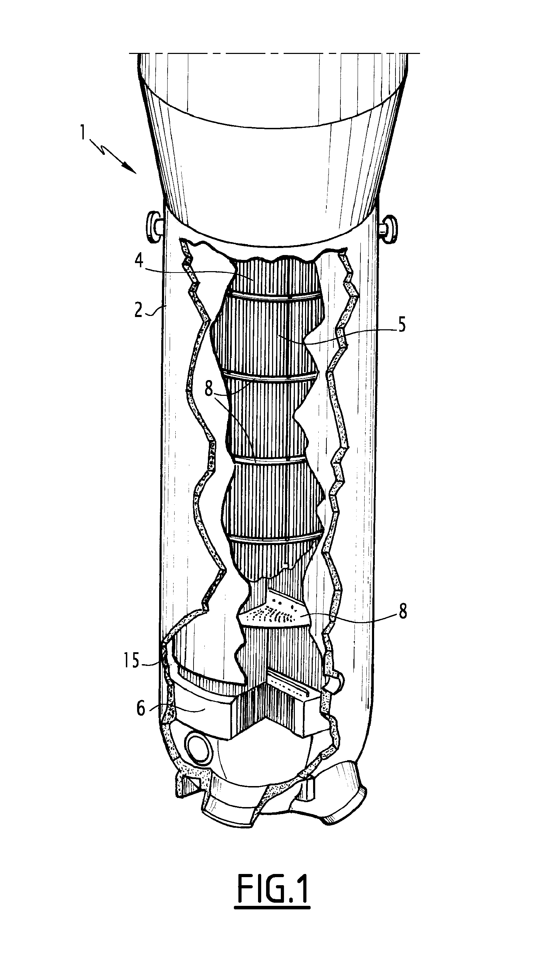

Sur la figure 1, on a représenté la partie inférieure d'un générateur de vapeur d'un réacteur nucléaire à eau sous pression, désigné de manière générale par la référence générale 1. Le générateur de vapeur 1 comporte de manière classique une enveloppe de pression 2 de forme sensiblement cylindrique à l'intérieur de laquelle est disposée de manière coaxiale, une enveloppe de faisceau 4 contenant un faisceau de tubes 5 du générateur de vapeur 1.

Le faisceau de tubes 5 est constitué par un très grand nombre de tubes 5 pliés en U, comportant chacun deux branches droites qui sont engagées et fixées à leur extrémité dans une plaque tubulaire 6 fixée à la partie inférieure de l'enveloppe de pression du générateur de vapeur 1.

L'enveloppe de pression 2 est raccordée à un fond hémisphérique délimitant une boîte à eau en deux parties.

A l'intérieur de l'enveloppe du faisceau 4, sont fixées dans des positions successives suivant la hauteur du faisceau, des plaques entretoises 8 destinées à maintenir les branches des tubes 5 du faisceau 4 pour les empêcher de vibrer pendant le fonctionnement du générateur de vapeur.

Chacune des plaques entretoises 8 est percée d'un réseau d'ouvertures analogue au réseau d'ouvertures traversant la plaque tubulaire 6 dans laquelle sont fixées les extrémités des tubes 5 du faisceau 4. Les branches droites des tubes 5 du faisceau sont engagées dans les ouvertures alignées des plaques entretoises 8 espacées suivant la direction longitudinale du tube 5.

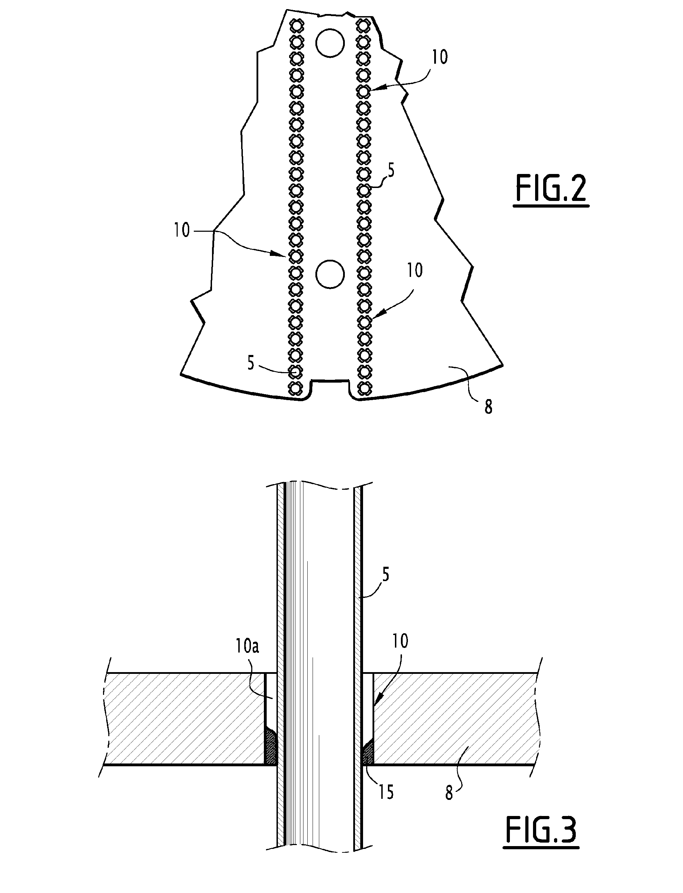

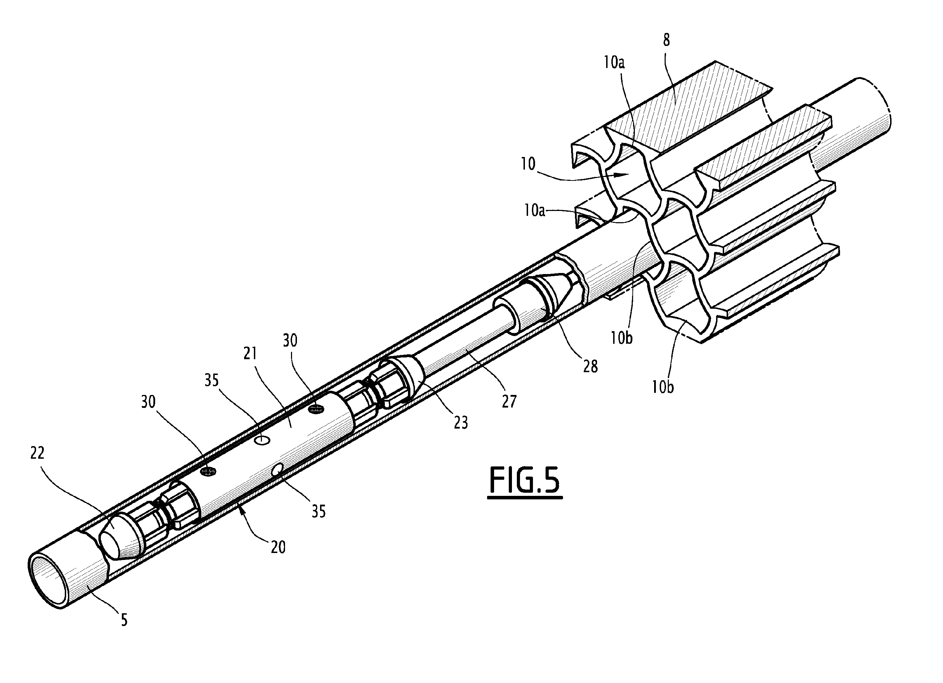

Ainsi comme montré à la figure 2, chaque plaque entretoise 8 est traversée par des passages 10 pour les tubes 5 du faisceau 4 et ces passages 10 ont, dans l'exemple de réalisation représenté sur cette figure, une forme comportant quatre alvéoles et dans ce cas ces passages 10 sont appelés quadrifoliés. Ces passages peuvent avoir une forme à trois alvéoles appelés trifoliés, comme montré à la figure 5.

Ces passages 10 sont donc formés chacun d'au moins trois alvéoles 10a séparées par des portions pleines 10b en contact avec un tube 5. Ces alvéoles 10a permettent le passage de l'eau d'alimentation du générateur de vapeur circulant dans la direction verticale de bas en haut.

L'eau en circulation dans le circuit secondaire et à l'intérieur de la partie secondaire du générateur de vapeur, en contact avec la surface extérieure des tubes 5 du faisceau 4, se charge en impuretés qui forment des dépôts 15 (figure 3) sur les plaques entretoises 8, en particulier dans les alvéoles 11 a entre les tubes 5 et les passages 10 de ces plaques entretoises 8 qui doivent assurer le maintien des tubes 5 et le passage de l'eau d'alimentation au contact de la surface extérieure des tubes 5.

Ces dépôts contiennent au moins un matériau ferromagnétique de type magnétite et il a été constaté que le colmatage des passages 10 commence par la partie basse, c'est-à-dire à partir de la face inférieure de la plaque tubulaire 8, et progresse vers le haut par accumulation au fur et à mesure du fonctionnement du réacteur.

Lors d'un arrêt de ce réacteur, après un certain temps de fonctionnement, il faut pouvoir détecter la présence de ce dépôt et également mesurer le taux de colmatage dans les passages 10 et plus particulièrement dans chacune de ces alvéoles 10a des plaques entretoises 8.

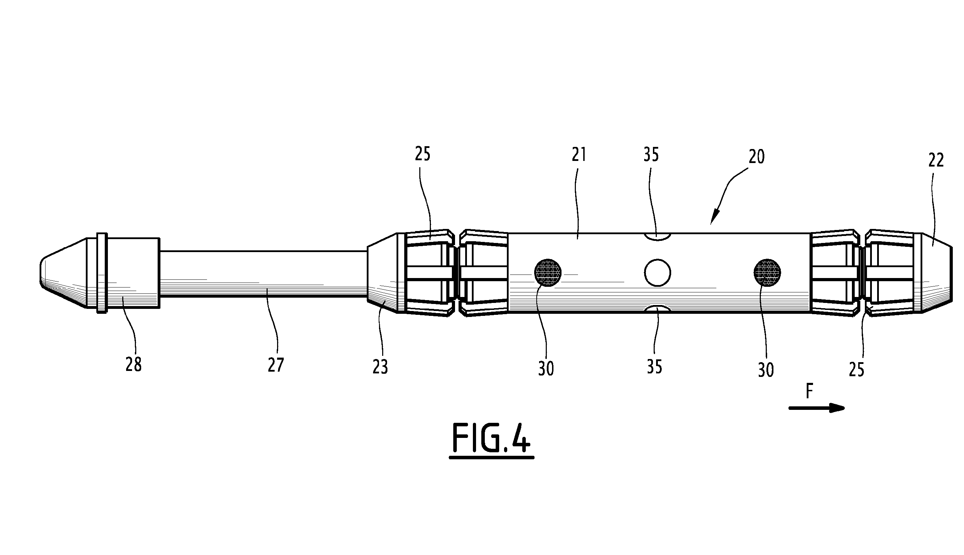

A cet effet, l'ensemble de détection et de mesure selon l'invention se compose d'une sonde représentée sur les figures 4 et 5 et désignée par la référence générale 20.

La sonde 20 comporte un corps 21 de forme générale cylindrique et réalisé, de préférence, en une matière ne présentant pas de caractéristique magnétique. Le corps 21 est obturé, à une de ses extrémités, par un bouchon de tête 22 de forme conique et, à l'autre de ses extrémités, par un bouchon de queue 23.

Le corps 21 de la sonde 20 est libre en rotation dans le tube 5 dans lequel ladite sonde se déplace et ce corps 21 comporte, à sa périphérie, des moyens de centrage 25 pour maintenir ledit corps sensiblement dans l'axe longitudinal du tube 5 correspondant. Ainsi que représenté à la figure 4, les moyens de centrage sont formés par deux bagues 25 montées respectivement à proximité du bouchon de tête 22 et du bouchon de queue 23. De préférence, ces bagues 25 sont élastiques pour assurer un auto-centrage du corps 21 dans le tube 5. D'autres systèmes d'auto-centrage peuvent être utilisés, comme par exemple un système mécanique de type ressort.

Le corps 21 de la sonde 20 porte, d'une part, sur sa face externe, au moins une source aimantée 30 d'auto-orientation de ce corps 21 par rapport aux portions pleines 10b des passages 10 et, d'autre part, au moins trois émetteurs 35 de champ magnétique destinés à être placés automatiquement chacun en face d'une portion pleine 10b lors du déplacement de la sonde 20 dans le tube 5 au niveau de chaque passage 10.

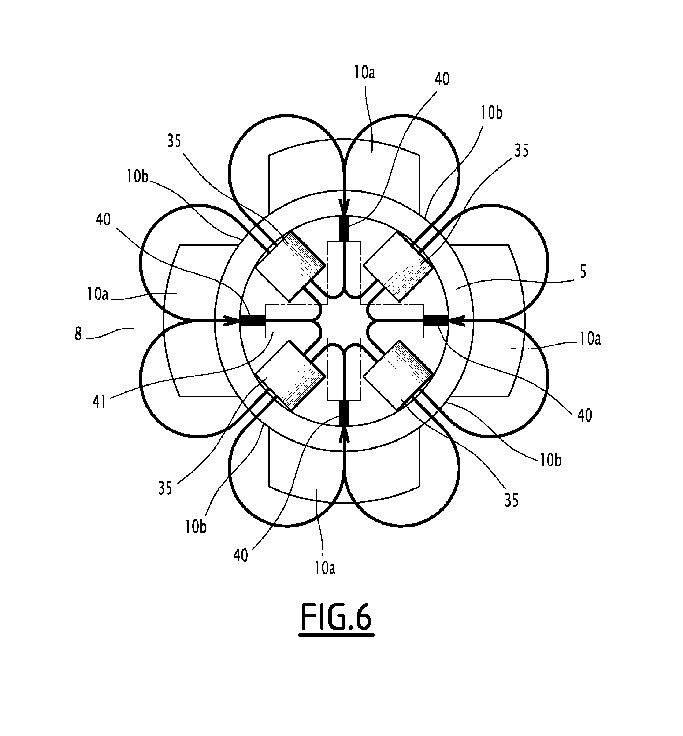

Ainsi que montré à la figure 6, le corps 21 de la sonde 20 contient au moins trois détecteurs 40 de champ magnétique placés chacun entre deux émetteurs 35 contigus.

Les émetteurs 35 et les détecteurs 40 sont disposés sur une même circonférence du corps 21 de la sonde 20. Dans le cas d'un passage 10 quadrifolié, c'est-à-dire comportant quatre alvéoles 10a séparées par quatre portions pleines 10b, les émetteurs 35 et les détecteurs 40 sont au nombre de quatre répartis à 90 sur la circonférence et dans le cas d'un passage 10 trifolié, c'est-à-dire comportant trois alvéoles 10a séparées par trois portions pleines 10b, les émetteurs 35 et les détecteurs 40 sont au nombre de trois répartis à 120° sur la circonférence.

Dans le mode de réalisation représenté à la figure 4, ladite au moins source aimantée 30 comprend au moins une première source aimantée 30 et au moins une seconde source aimantée 30 disposées de part et d'autre de la circonférence formée par les émetteurs 35 et les détecteurs 40.

Selon une première variante, au moins une source aimantée 30 est disposée devant la circonférence formée par les émetteurs 35 et les détecteurs 40 par rapport au sens de déplacement de la sonde 20 dans le tube 5, indiqué par la flèche F sur la figure 4.

Selon une seconde variante, ladite au moins source aimantée 30 est disposée derrière la circonférence formée par les émetteurs 35 et les détecteurs 40 par rapport au sens de déplacement F de la sonde 20 dans le tube 5.

Plusieurs sources aimantées 30 peuvent être placées sur une même circonférence du corps 21 de part et d'autre de la circonférence définie par les émetteurs 35 et les détecteurs 40 ou devant ou derrière cette circonférence.

Chaque source aimantée 30 est constituée par un aimant permanent ou un électro-aimant dont l'orientation Nord-Sud coïncide avec l'axe radial du corps 21 de la sonde 20.

Chaque émetteur 30 est formé par un aimant permanent ou un électro-aimant dont le pôle Nord est dirigé vers l'extérieur du corps 21 de la sonde 20 et dans ce cas la ou chaque source aimantée 30 est disposée sur une même génératrice du corps qu'un émetteur 35.

Selon une variante, chaque émetteur 35 est formé par une bobine émettrice et dans ce cas chaque bobine émettrice est disposée sur une génératrice médiane entre deux sources aimantées 30.

Enfin, chaque détecteur 40 de champ magnétique est formé par un magnétomètre.

Ainsi que montré à la figure 6, dans le corps 21 de la sonde 20 un circuit magnétique 41 permet de maximiser le flux magnétique au niveau des détecteurs 40.

Ces détecteurs 40 sont reliés par des fils conducteurs, non représentés, s'étendant le long du corps 21 jusqu'au bouchon de queue 23. Ce bouchon de queue 23 comporte un prolongement 27 situé dans l'axe du corps 21 et muni, à son extrémité libre, d'un connecteur 28 relié aux fils conducteurs des détecteurs 40. Le connecteur 28 est, de préférence, un connecteur tournant permettant la libre rotation du corps 21 dans le tube 5 correspondant.

Un circuit magnétique, non représenté, peut être associé à chacune des sources aimantées 30 de manière à confiner le champ magnétique en dehors de la zone de mesure afin de ne pas perturber cette dernière.

On peut également disposer les sources aimantées 30 en opposition des aimants 35 de mesure afin de limiter l'étalement des lignes de champ suivant l'axe du tube 5 et améliorer ainsi la résolution axiale de l'ensemble de mesure. Dans ce cas, le nombre et la disposition angulaire des sources aimantées 30 de guidage et des aimants 35 de mesure sont identiques.

Selon un autre mode de réalisation, les émetteurs 35 peuvent assurer le rôle des sources aimantées 30 d'auto-positionnement angulaire. Dans ce cas, les sources aimantées 30 ne sont pas nécessaires.

La détection et la mesure du taux de colmatage des dépôts 15 dans chacune des alvéoles 10a des passages 10 d'eau du circuit secondaire d'une plaque entretoise 8 s'effectuent de la manière suivante.

On introduit à partir d'une ouverture de visite d'une des boîtes à eau du générateur de vapeur (visible sur la figure 1), une sonde 20 à l'intérieur d'un tube 5 du faisceau 4. Cette sonde 20 est reliée à un système d'amplification et de visualisation des variations des signaux transmis par les détecteurs 40.

La sonde 20 est déplacée par des moyens appropriés de type connu, non représentés, comme par exemple une perche, ou par l'intermédiaire d'un tireur-pousseur placé à l'extérieur de la boîte à eau du générateur de vapeur, à l'intérieur du tube 5 dont on souhaite examiner le colmatage des passages 10 des plaques entretoises 8 dans lesquelles le tube 5 est placé.

A l'approche de la plaque entretoise 8, la ou les source(s) aimantée(s) 30 placée(s) devant les émetteurs 35 de champ magnétique est attirée par l'une des portions pleines 10b du passage 10. Par conséquent, la sonde 20 s'aligne dans une position angulaire donnée. Dans cette position, chaque émetteur 35 de champ magnétique se positionne également devant une portion pleine 10b du passage 10 et chaque détecteur 40 de champ magnétique se place devant une alvéole 10a.

Dans le cas d'émetteurs 35 constitués par des aimants permanents, le pôle Nord de chacun de ces aimants est orienté vers la paroi du tube 5 et le pôle Sud vers l'intérieur ou inversement, du corps 21 de la sonde 20. Les aimants s'opposent donc deux à deux.

Ces aimants 35 participent également à l'orientation de la sonde 20 pour que chacun de ces aimants 35 se place en face d'une portion pleine 10b.

Selon le principe du chemin de reluctance la plus faible dans un circuit magnétique, les lignes de champ représentées sur la figure 6 sont guidées par la plaque entretoise 8. Ces lignes de champ sont captées par les portions pleines 10b et suivent le contour de l'alvéole 10a. Dans le plan médian de chaque alvéole 10a, les lignes de champ issues de deux aimants 35 voisins s'opposent. Cette opposition au sein de la plaque entretoise 8 provoque un flux de fuite ou entrefer du circuit magnétique dans la zone centrale de chaque alvéole 10a, les lignes de champ rebouclant vers le pôle Sud. En plaçant le détecteur 40 de champ magnétique au droit de cette zone, on récupère une information sur le taux de colmatage de chaque alvéole 10a. Le circuit magnétique 41 permet de maximiser le flux magnétique au niveau des détecteurs 40.

La sonde 20 de l'ensemble de détection et de mesure selon l'invention permet une mesure précise et complète en effectuant un traitement différentié des dépôts dans chaque alvéole 10a du passage 10 à contrôler. L'utilisation de préférence d'aimants de mesure dont l'orientation Nord-Sud est disposée radialement par rapport à l'axe du tube permet une mesure basée sur le principe de la fermeture d'un circuit magnétique et non pas sur la déviation des lignes de champ comme dans les dispositifs de détection utilisés jusqu'à présent. La précision de la mesure est ainsi améliorée car le résultat n'est pas fonction de la localisation des dépôts dans chaque alvéole.

Selon une variante, le corps 21 de la sonde 20 peut avoir une liberté de rotation limitée dans le tube autour d'une position d'équilibre par exemple une course de un tiers de tour soit plus ou moins 60°. En l'absence de plaques entretoises 8 à proximité de la sonde 20, le corps 21 de cette sonde est maintenu dans sa position d'équilibre par des organes appropriés comme par exemple des ressorts de rappel. La raideur de ces ressorts est telle qu'à l'approche de la plaque entretoise 8, le couple créé par la force d'aimantation l'emporte sur le couple de rappel créé par les ressorts. Dans cette variante, les fils conducteurs peuvent être liés à l'appareil de mesure au moyen de câbles coaxiaux ce qui évite l'utilisation d'un connecteur tournant.

Lorsqu'on utilise des bobines émettrices à la place d'aimants permanents, la distance entre les sources aimantées 30 d'auto-orientation situées de part et d'autre de la circonférence définies par les émetteurs 35 et les récepteurs 40 doit être inférieure à la hauteur de la plaque entretoise 8 ceci afin de conserver l'alignement angulaire du corps 21 de la sonde 20 sur toute la hauteur de la plaque entretoise 8.

Afin de franchir les parties cintrées des tubes de générateurs de vapeur, les sources aimantées 30 et l'ensemble de mesures constitué par les émetteurs 35 et les détecteurs 40 peuvent être séparés en plusieurs parties reliées mécaniquement entre elles par une liaison flexible mais solidaire en rotation.

L'ensemble selon l'invention permet donc par des moyens peu onéreux et simples à mettre en oeuvre de détecter et de mesurer rapidement le taux de colmatage de chacune des alvéoles de chaque passage d'eau d'un circuit secondaire dans les plaques entretoises d'un générateur de vapeur pour déterminer si un nettoyage de ces passages de ces plaques est nécessaire.

D'une manière générale, l'invention s'applique à la détection et à la mesure du taux de colmatage par des dépôts contenant au moins un matériau ferromagnétique dans des passages de tout générateur de vapeur ou échangeur de chaleur comportant un faisceau de tubes maintenu par des plaques entretoises dans lesquelles sont ménagées des alvéoles de passage d'eau.

## Revendications

1. Ensemble de détection et de mesure du taux de colmatage par des dépôts contenant au moins un matériau ferromagnétique, des passages (10) d'eau d'un circuit secondaire dans des plaques entretoises (8) d'un générateur de vapeur (1) d'un réacteur nucléaire à eau sous pression, ledit générateur (1) comprenant un faisceau (4) de tubes (5) de circulation de l'eau primaire, dont les branches verticales sont maintenues dans des passages (10) des plaques entretoises (8), munis chacun d'au moins trois alvéoles (10a) séparées par des parties pleines (10b) en contact avec un tube (5), **caractérisé en ce qu'**il comprend une sonde (20) déplaçable en continu dans un tube (5) du faisceau (4) et comportant un corps (21) de forme allongée cylindrique portant, d'une part, sur sa face externe, au moins une source aimantée (30) d'auto-orientation du corps (21) de la sonde par rapport aux portions pleines (10b) des passages (10) et, d'autre part, au moins trois émetteurs (35) de champ magnétique destinés à être placés automatiquement chacun en face d'une portion pleine (10b) lors du déplacement de la sonde (20) dans un tube (5) au niveau de chaque passage (10) et **en ce que** le corps (21) de la sonde (20) contient au moins trois détecteurs (40) de champ magnétique placés entre deux émetteurs (35) contigus, l'ensemble des détecteurs (40) étant relié par des moyens de connexion à un système d'amplification et de visualisation des signaux transmis par lesdits détecteurs (40) lors du déplacement de la sonde (20) dans un tube (5) au niveau de chaque passage (10) à examiner dans les plaques entretoises (8).

2. Ensemble selon la revendication 1, **caractérisé en ce que** lesdits émetteurs (35) et lesdits détecteurs (40) sont disposés sur une même circonférence du corps (21) de la sonde (20).

3. Ensemble selon la revendication 1 ou 2, **caractérisé en ce que** ladite au moins une source aimantée (30) est disposée devant la circonférence formée par lesdits émetteurs (35) et lesdits détecteurs (40) par rapport au sens de déplacement de la sonde (20) dans le tube (5).

4. Ensemble selon la revendication 1 ou 2, **caractérisé en ce que** ladite au moins une source aimantée (30) est disposée derrière la circonférence formée par lesdits émetteurs (35) et lesdits détecteurs (40) par rapport au sens de déplacement de la sonde (20) dans le tube (5).

5. Ensemble selon la revendication 1 ou 2, **caractérisé en ce que** ladite au moins une source aimantée (30) comprend au moins une première source aimantée (30) et au moins une seconde source aimantée (30) disposées de part et d'autre de la circonférence formée par lesdits émetteurs (35) et lesdits détecteurs (40).

6. Ensemble selon l'une quelconque des revendications 1 à 5, **caractérisé en ce que** ladite au moins une source aimantée (30) est formée par un aimant permanent ou un électro-aimant dont l'orientation Nord-Sud coïncide avec l'axe radial du corps (21) de la sonde 20.

7. Ensemble selon l'une quelconque des revendications 1 à 6, **caractérisé en ce que** lesdits émetteurs (35) et lesdits détecteurs (40) sont au nombre de trois répartis à 120° sur la circonférence.

8. Ensemble selon l'une quelconque des revendications 1 à 6, **caractérisé en ce que** lesdits émetteurs (35) et lesdits détecteurs (40) sont au nombre de quatre répartis à 90° sur la circonférence.

9. Ensemble selon l'une quelconque des revendications 1 à 8, **caractérisé en ce que** chaque émetteur (35) est formé par un aimant permanent ou un électro-aimant dont l'un des pôles est dirigé radialement vers l'extérieur du corps (21) de la sonde (20).

10. Ensemble selon l'une quelconque des revendications 1 à 9, **caractérisé en ce que** ladite au moins une source aimantée (30) est disposée sur une même génératrice du corps (21) qu'un émetteur (35).

11. Ensemble selon l'une quelconque des revendications 1 à 8, **caractérisé en ce que** chaque émetteur (35) est formé par une bobine émettrice.

12. Ensemble selon la revendication (11), **caractérisé en ce que** chaque bobine émettrice est disposée sur une génératrice sensiblement médiane entre deux sources aimantées (30).

13. Ensemble selon l'une quelconque des revendications précédentes, **caractérisé en ce que** chaque détecteur (40) de champ magnétique est formé par un magnétomètre.

14. Ensemble selon l'une quelconque des revendications précédentes, **caractérisé en ce que** les émetteurs (35) assurent le rôle des sources aimantées (30) d'auto-positionnement angulaire.

15. Procédé de détection et de mesure du taux de colmatage par des dépôts contenant au moins un matériau ferromagnétique, des passages (10) d'eau d'un circuit secondaire dans des plaques entretoises (8) d'un générateur de vapeur d'un réacteur nucléaire à eau sous pression, au moyen d'un ensemble de détection et de mesure selon l'une quelconque des revendications précédentes, **caractérisé en ce que** :
- on introduit au moins une sonde (20) libre en rotation dans au moins un tube (5) du faisceau (4) de tubes (5) du générateur de vapeur (1),
- on déplace à une vitesse déterminée ladite au moins une sonde (20) dans ledit au moins tube (5), ladite au moins une source aimantée (30) orientant automatiquement le corps (21) de la sonde (20) pour placer chaque émetteur (35) de champ magnétique en regard d'une portion pleine (10b) d'un passage (10) et chaque détecteur (40) de champ magnétique en regard d'une alvéole (10a) dudit passage (10), et
- on amplifie et on visualise les variations des signaux transmis par lesdits détecteurs (40) lors du déplacement de ladite au moins une sonde (20) dans ledit au moins tube (5) au niveau de chaque passage (10) à examiner dans les plaques entretoises (8).

16. Procédé selon la revendication 15, **caractérisé en ce qu'**en fonction des variations des signaux transmis par lesdits détecteurs (40), on établit une carte de répartition des dépôts dans chaque alvéole (10a) pour au moins un passage (10) d'au moins une plaque entretoise (8) du générateur de vapeur (1).
